# DEMANDE DE BREVET EUROPEEN

(11) **EP 0 788 960 A1**
(43) Date de publication de la demande: **13.08.1997**
(21) Numéro de dépôt: 97400285.9
(22) Date de dépôt: 07.02.1997
(51) Int. Cl.: B61D 19/00, B60J 5/06

(54) **Système de fermeture d'une ouverture formée dans la caisse d'un véhicule**

(30) Priorité: 09.02.1996 FR 9601645
(71) Demandeur: FERSYSTEM S.A., 37270 Montlouis sur Loire (FR)
(72) Inventeur: Mercier, David, 37270 Veretz (FR); Lyer, Philippe, 37300 Joue les Tours (FR)
(74) Mandataire: Debay, Yves

(57) **Abrégé**

La présente invention concerne un système de fermeture d'une ouverture (21, 23, 24) formée dans la caisse (2) d'un véhicule par au moins un vantail (1) coulissant constituant une porte dans lequel la porte est d'une part suspendue à sa partie avant et arrière par un dispositif de coulissement (66, 86) respectif se déplaçant dans un rail (3) de coulissement et de suspension et d'autre part guidé par au moins un rail (4) de guidage caractérisé en ce que les dispositifs de coulissement (66, 86) sont constitués d'au moins un patin (66, 86) à circulation de billes, le rail (3) de coulissement et de suspension, cintré faiblement vers l'intérieur de la caisse, ayant une longueur de l'ordre de deux fois la longueur du vantail (1) et étant pourvu d'une goulotte dans laquelle circule les billes du ou des patins (66, 86), le dispositif de coulissement de la partie arrière étant relié au vantail (1) de la porte par un dispositif de déboîtement (61, 63, 62) permettant à la porte de déboîter par rapport à la caisse (2) d'une valeur correspondant à la dimension D entre la partie avant du rail cintrée (31) et la partie linéaire (30) de ce rail (3), pour dégager le vantail (1) à l'extérieur de la caisse dans la position d'ouverture.

## Description

La présente invention concerne un système de fermeture d'une ouverture formée dans la caisse d'un véhicule.

L'invention a pour application par exemple le matériel roulant ferroviaire dont les rames de métro font partie.

Il est connu des systèmes de portes coulissantes qui pénètrent dans des logements prévus de chaque côté de l'ouverture de la caisse pour pouvoir s'écarter et libérer l'accès à l'intérieur de la caisse. Ces logements dans la caisse diminuent l'espace disponible à l'intérieur du véhicule. Ceci est particulièrement gênant dans le cas des rames de métro où d'une part on est limité en gabarit par la taille des tunnels, et d'autre part où on cherche à obtenir une capacité d'accueil maximale à l'intérieur du véhicule.

Il est connu également des portes louvoyantes sur le matériel ferroviaire, par exemple sur les T.G.V. En général ces systèmes d'ouverture louvoyants comprennent des mécanismes assez complexes et des bras de support de la porte actionnés par des vérins qui prennent beaucoup de place. Un tel système n'est pas utilisable dans le matériel de métro pour les raisons évoquées ci-dessus.

La présente invention a donc pour but d'offrir un système de fermeture à porte coulissante louvoyante permettant d'augmenter la capacité d'accueil à l'intérieur du véhicule tout en obtenant un système de fermeture qui se trouve dans le prolongement des parois extérieures de la caisse du véhicule lorsque les portes sont fermées.

Ce but est atteint par le fait que le système de fermeture d'une ouverture formée dans la caisse d'un véhicule par au moins un vantail coulissant constituant une porte dans lequel la porte est d'une part suspendue à sa partie avant et arrière par un dispositif de coulissement respectif se déplaçant dans un rail de coulissement et de suspension et d'autre part guidé par au moins un rail de guidage, les dispositifs de coulissement étant constitués d'au moins un patin à circulation de billes, le rail de coulissement et de suspension, cintré faiblement vers l'intérieur de la caisse, ayant une longueur de l'ordre de deux fois la longueur du vantail et étant pourvu d'une goulotte dans laquelle circule les billes du ou des patins, le dispositif de coulissement de la partie arrière étant relié au vantail de la porte par un dispositif de déboîtement permettant à la porte de déboîter par rapport à la caisse d'une valeur correspondant à la dimension D entre la partie avant du rail cintrée et la partie linéaire de ce rail, pour dégager le vantail à l'extérieur de la caisse dans la position d'ouverture.

Selon une autre particularité le rail de coulissement et de suspension est solidaire de la partie supérieure du vantail de porte, les dispositif de coulissement avant et arrière étant constitués chacun d'un patin à circulation de billes articulés sur un support respectif solidaire d'une partie) fixe de la caisse.

Selon une autre particularité le système de fermeture et d'ouverture comporte deux rails de guidage pour chaque vantail disposés respectivement en partie supérieure et inférieure du vantail qui coopèrent chacun avec un doigt de guidage, respectivement.

Selon une autre particularité le patin arrière de coulissement est articulé sur une première biellette montée pivotante sur le support fixe, le rail de guidage supérieur étant solidaire du vantail de porte et constitué d'une portion longue parallèle au vantail et d'une portion coudée de faible longueur située sensiblement dans la partie arrière du vantail, le rail de guidage supérieur formant sensiblement un L dont le pied constitué par la partie coudée est orienté vers le vantail, le dispositif de déboîtement étant constitué d'une seconde biellette, de longueur supérieure à la longueur de la première biellette articulée avec le patin arrière, la seconde biellette étant montée pivotante par une première de ses extrémités sur le support fixe du dispositif de coulissement arrière, la seconde extrémité de la biellette supportant un doigt de guidage logé dans le rail de guidage, la première biellette et la seconde biellette étant solidaires angulairement entre elles et pivotant autour d'un même axe de façon que l'angle A formé entre elles soit constant lors des mouvements du vantail.

Selon une autre particularité deux vantaux sont montés de façon à ce que les deux parties avant des vantaux se joignent et obturent totalement l'ouverture de la caisse, les parties arrières venant par emboîtement s'aligner avec la paroi extérieure de la caisse, les deux rails de coulissement et de suspension des vantaux étant situés dans deux plan horizontaux différents pour empêcher le télescopage de la partie avant de ces derniers lors de la fermeture des vantaux.

Selon une autre particularité le système de fermeture et d'ouverture comporte un seul vantail de dimensions correspondant aux dimensions de l'ouverture de la caisse, la caisse comportant un logement ou ouverture situé dans sa partie opposée au côté d'ouverture du vantail et destiné à accueillir l'extrémité avant cintrée du rail de coulissement et de suspension lors de la fermeture du vantail.

Selon une autre particularité le rail de coulissement et de suspension est solidaire de la partie supérieure de la caisse du véhicule le dispositif de coulissement de la partie avant est monté pivotant par rapport à une pièce d'entretoise de dimension fixe solidaire du vantail de porte et dont la dimension correspond à l'écart D entre la partie avant du rail cintrée et la partie linéaire de ce rail.

Selon une autre particularité le système de fermeture et d'ouverture comporte deux rails de guidage pour chaque vantail disposés respectivement en partie supérieure et inférieure du vantail et coopèrent chacun avec un doigt de guidage, respectivement, le dispositif de déboîtement d'un vantail est constitué d'une biellette reliée d'une part au dispositif de coulissement de la partie arrière du vantail et d'autre part au doigt de guidage coopérant avec le rail de guidage supérieur, les rails de guidage supérieur et inférieur étant coudés à proximité de l'ouverture de la caisse et ayant leur partie droite s'étendant à l'extérieur.

Selon une autre particularité le système de fermeture et d'ouverture le rail de coulissement et de suspension est cintré en tout point de la partie cintrée selon un rapport entre la longueur du patin, le rayon de cintrage du rail, le diamètre des billes, le diamètre de chemin de roulement et les jeux; le cintrage étant disposé dans l'ouverture.

Selon une autre particularité le système de fermeture et d'ouverture le cintrage du rail de coulissement et suspension est formé dans sa partie avant sur la moitié de sa longueur environ, le rayon de cintrage étant au moins deux fois supérieur à la longueur du vantail.

Selon une autre particularité le système de fermeture et d'ouverture les patins à circulations de billes sont faiblement cintrés vers l'intérieur de la caisse, le rayon de cintrage des patins étant supérieur ou égal au rayon de cintrage du rail de coulissement et suspension.

Selon une autre particularité des moyens d'actionnement automatique d'un vantail de la porte sont reliés entre une partie fixe de la caisse et une pièce du vantail et sont pourvus de moyens permettant la fourniture d'un surcroît de puissance pour permettre le déboîtement de la porte par rapport à l'ouverture du cadre.

Selon une autre particularité des moyens d'actionnement automatique d'un vantail de la porte sont reliés entre une partie fixe de la caisse et le rail de coulissement et de suspension et sont pourvus de moyens permettant la fourniture d'un surcroît de puissance pour permettre le déboîtement de la porte par rapport à l'ouverture du cadre.

D'autres particularités et avantages de la présente invention apparaîtront plus clairement à la lecture de la description ci-après faite en référence aux dessins annexés dans lesquels :
la figure 1A représente une vue de dessus d'un vantail de porte dans un premier mode de réalisation de l'invention en position de fermeture et en traits pointillés en position d'ouverture ;
la figure 1B représente une vue en coupe de la caisse et du dispositif de pivotement arrière du vantail du premier mode de réalisation de l'invention représenté en position fermée ;
la figure 1C représente une vue en coupe de la caisse et du dispositif de pivotement avant du vantail du premier mode de réalisation de l'invention, représenté en position fermée;
la figure 2A représente une vue en coupe de la caisse et du vantail au niveau du dispositif de pivotement arrière du premier mode de réalisation de l'invention, en position d'ouverture du vantail ;
la figure 2B représente le dispositif de pivotement avant en position du vantail ouvert du premier mode de réalisation de l'invention,
la figure 3A représente une vue en coupe du dispositif de pivotement arrière supérieur de la porte du premier mode de réalisation de l'invention;
la figure 3B représente une vue de face avec coupe partielle du pivot arrière suivant F de la figure 1B;
la figure 4A représente une vue de face du vantail suspendu à son rail ;
la figure 4B représente une vue de dessous du vantail suspendu au rail ;
la figure 5 représente le dispositif de coulissement à circulation de billes ;
la figure 6 représente une deuxième variante de réalisation du dispositif de déboîtement de la partie arrière de la porte.
la figure 7A représente une vue de dessus d'un vantail en position ouverte dans un troisième mode de réalisation selon l'invention,
la figure 7B représente la vue en coupe selon BB du vantail de la figure 7A,
la figure 8 représente une vue de dessus et en position fermée du vantail la figure 7A.

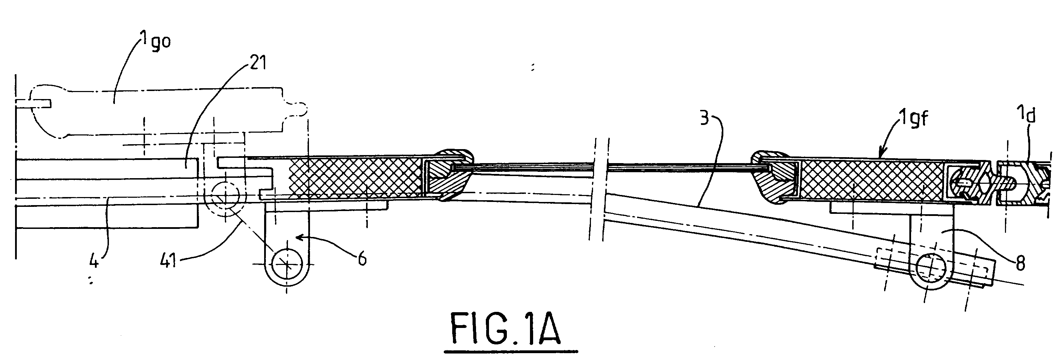

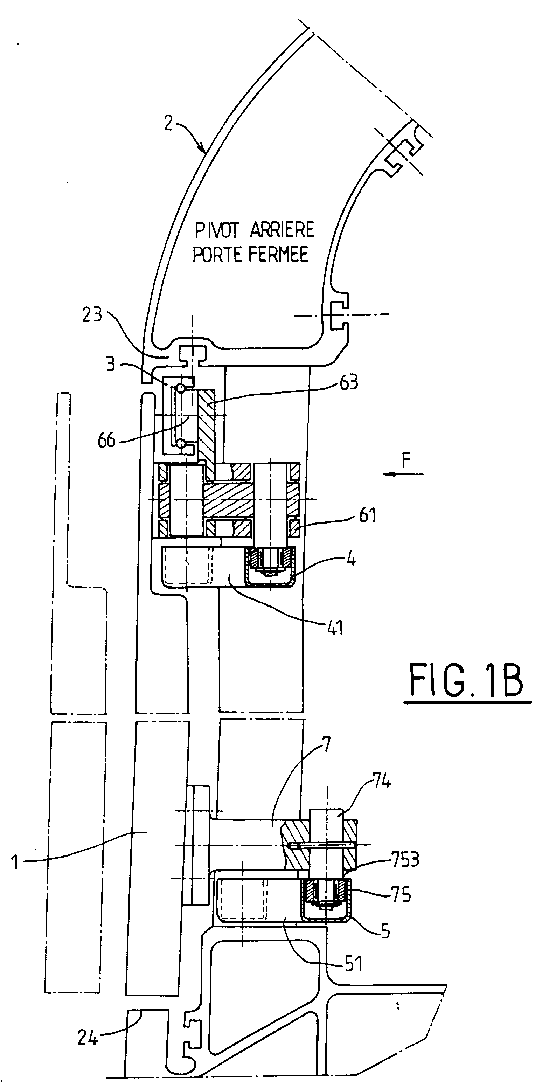

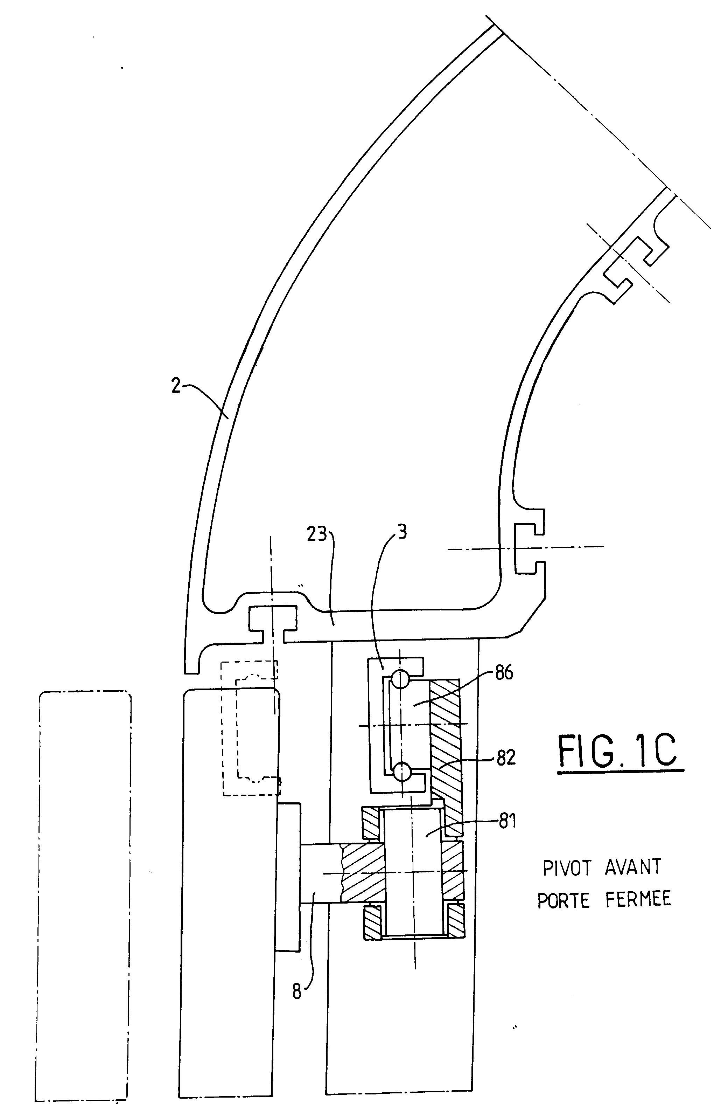

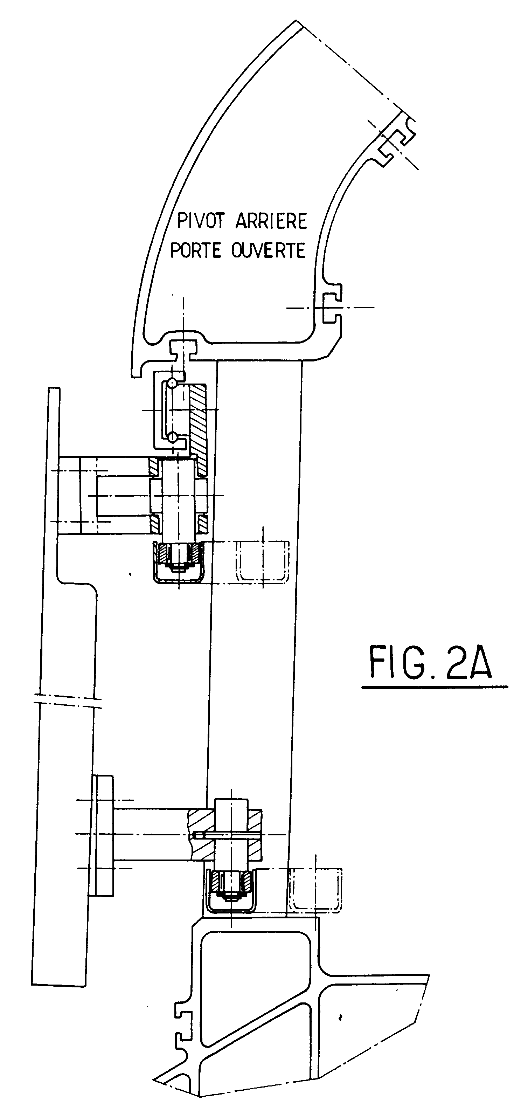

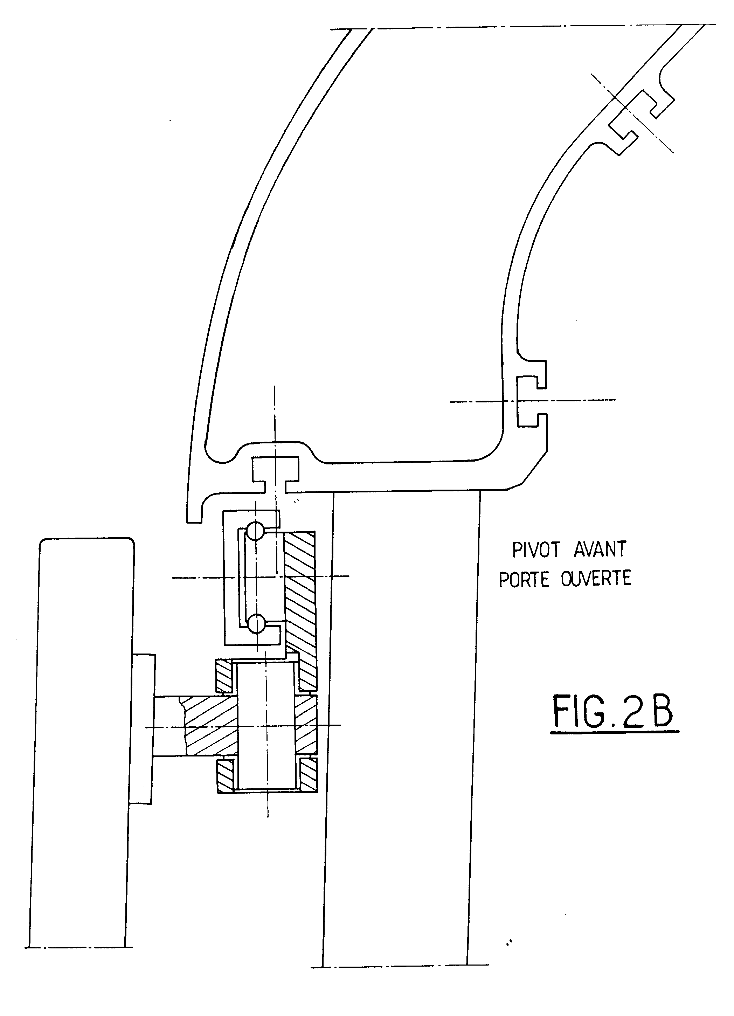

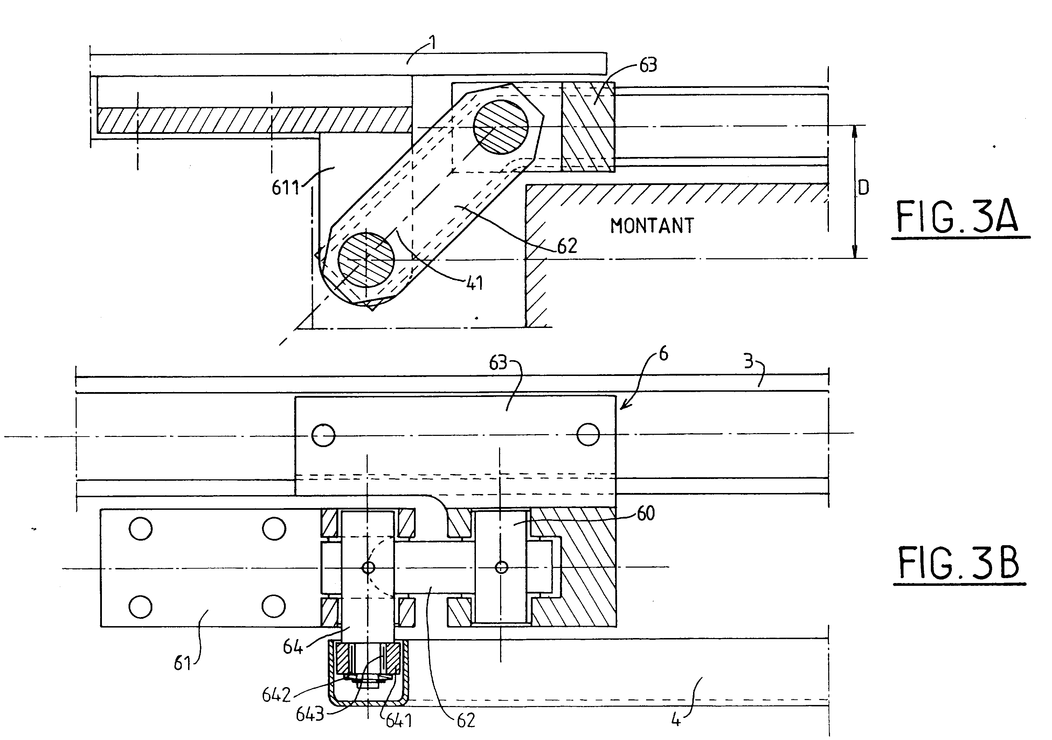

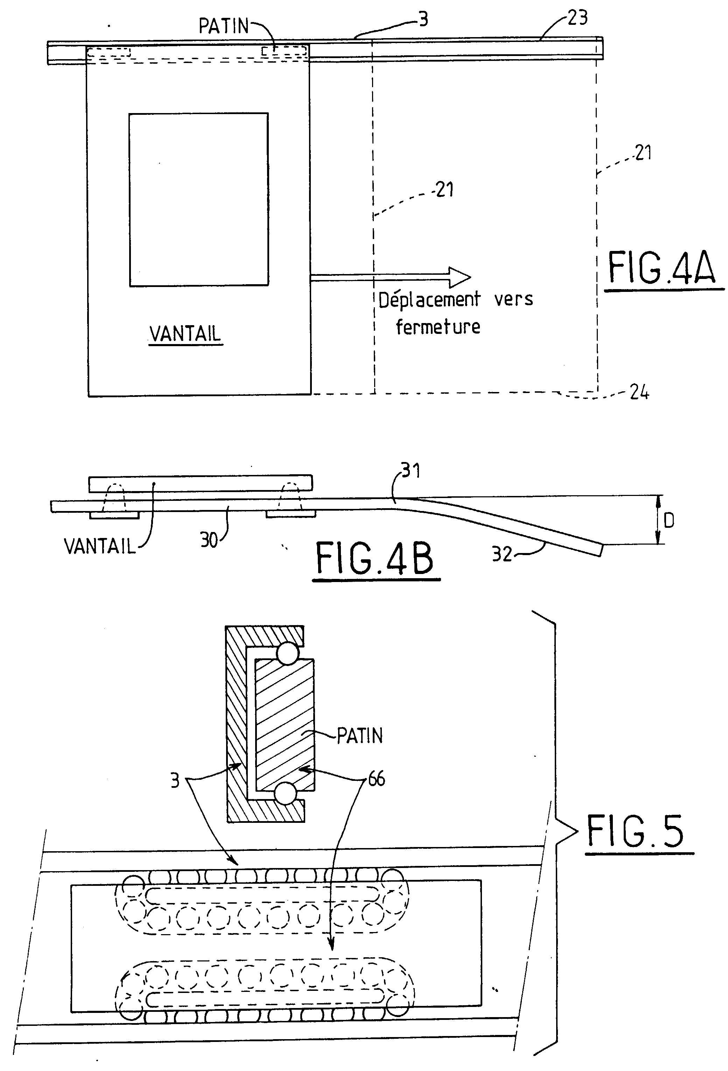

L'invention va maintenant être décrite en liaison avec les figures 1 à 5. L'invention consiste en un vantail de porte (1) destiné à venir obturer une ouverture formée dans la caisse (2) d'un véhicule. Cette ouverture comporte deux côtés latéraux et verticaux (21), un côté supérieur (23), un côté inférieur (24). Cette ouverture est destinée, soit à être obturée par un vantail (1) comme représenté à la figure 4A, soit à être obturée par deux vantaux (1gf, 1d) comme représentés à la figure 1A. L'obturation est permise grâce à un coulissement du vantail sur un rail de suspension (3, figures 1A, 4A) à l'aide de patins (66) de coulissement à circulation de billes comme représenté à la figure 5. Comme représenté dans les figures 4B et 1A, le rail (3) de coulissement et de suspension du vantail (1) est cintré vers l'intérieur de la caisse du véhicule de façon à ce que la partie avant du vantail (1) décrive un arc de cercle et vienne se placer dans l'alignement de la paroi extérieure de la caisse (2) du véhicule (figure 1B). La partie arrière de la porte subit au cours de la fermeture de l'ouverture un mouvement d'emboîtement et, au cours de l'ouverture un mouvement de déboîtement que nous allons décrire. Le vantail (1g) est suspendu à sa partie arrière supérieure comme représenté à la figure 1B par un dispositif à biellette permettant un déboîtement de la porte et un maintien de celle-ci à une distance suffisante de la caisse lorsque la porte est en position ouverte (1go représentée à la figure 1A). Ce système de déboîtement de la partie arrière de la porte comporte également, dans la partie inférieure de la porte, un bras de support (7) portant à son extrémité un axe (74) sur lequel est monté un galet (75) monté sur roulement (753) et roulant dans un rail (5) de guidage à section en U solidarisé à la partie inférieure de l'ouverture de la caisse du véhicule. De même, un rail (4) en U guide un galet (641) monté par un roulement (643) sur un premier axe (64) solidaire d'une biellette (62) articulée à pivotement par un second axe (60) entre d'une part une pièce (63) solidaire d'un patin de coulissement (66) coulissant dans le rail de coulissement (3) et d'autre part une pièce (61) de liaison avec le vantail (1) de la porte. Cette pièce (61) comporte un bras (611, figure 3A) de longueur correspondant à la distance D de pénétration du rail (4) coudé de guidage . A sa partie inférieure et arrière, le vantail est également maintenu par un bras (7) dont la dimension correspond à la distance D séparant l'axe de symétrie de la partie rectiligne du rail (5) de la partie coudée (51) de ce rail. La partie avant supérieure de la porte est suspendue au rail (3) par un bras (8) dont la dimension correspond également à la dimension D de cintrage du rail (3). Le bras (8) est monté pivotant (81) avec la pièce (82) solidaire du patin (86).

En fonctionnement, lorsque la porte du vantail (1gf) de la figure 1A est actionnée dans le sens de l'ouverture, le galet (641) suit le profil courbé (41) du rail (4) et exerce par l'intermédiaire du bras (611) un effort sur la partie arrière du vantail qui va provoquer son déboîtement par rapport à l'alignement de la caisse. La partie arrière du vantail va pouvoir se déboîter par pivotement de la biellette (62) pendant que le patin de coulissement (66) subit un déplacement linéaire sur le rail de suspension (3). Lorsque le doigt (641) est arrivé dans la partie rectiligne du rail (4) et a quitté la partie courbée (41), la porte est décalée par rapport à la paroi extérieure de la caisse (2) d'une distance D correspondant à la dimension du bras (611). La biellette (62) a effectué pendant ce temps le pivotement nécessaire au déboîtement du vantail. La partie avant de la porte suit la partie cintrée (31) du rail de suspension (3) jusqu'au moment où la partie avant arrivant sur la partie linéaire (30) du rail, le vantail se déplace parallèlement à la caisse à une distance D.

La partie arrière et inférieure de la porte comporte également un rail courbé (5) et un bras de support qui permet de maintenir la porte à la distance D de la caisse une fois la portion coudée (51) franchie. Le vantail (1gf) peut être associé à un deuxième vantail droit (1d) de façon à obturer une ouverture de dimension deux fois plus grande. Le vantail (1d) coopérera lui aussi avec un rail (3) de coulissement et de suspension cintré et deux rails courbés (4, 5) pour guider le déboîtement de la partie arrière de ce vantail. Les patins de coulissement (66) sont constitués chacun d'un chemin à billes dans lequel les billes circulent de façon continue dans le chemin du patin et dans la goulotte du rail (3), comme cela est connu de façon classique. Le cintrage du rail peut être limité en angle, ne dépassant par exemple en aucun point un angle de 15°. Le rayon de cintrage peut être deux à trois fois supérieur à la longueur du vantail. Ceci permet, compte tenu du faible cintrage, aux billes de continuer à circuler dans le patin grâce au jeu de fonctionnement du patin sur son rail.

Chaque vantail est entraîné par un système à courroie classique entraîné de façon connue par un moteur électrique commandé par un dispositif électronique de commutation. Le circuit électronique comporte des composants de puissance permettant au moteur de fournir un surcroît de puissance nécessaire pour franchir la partie coudée (41, 51) des rails de guidage.

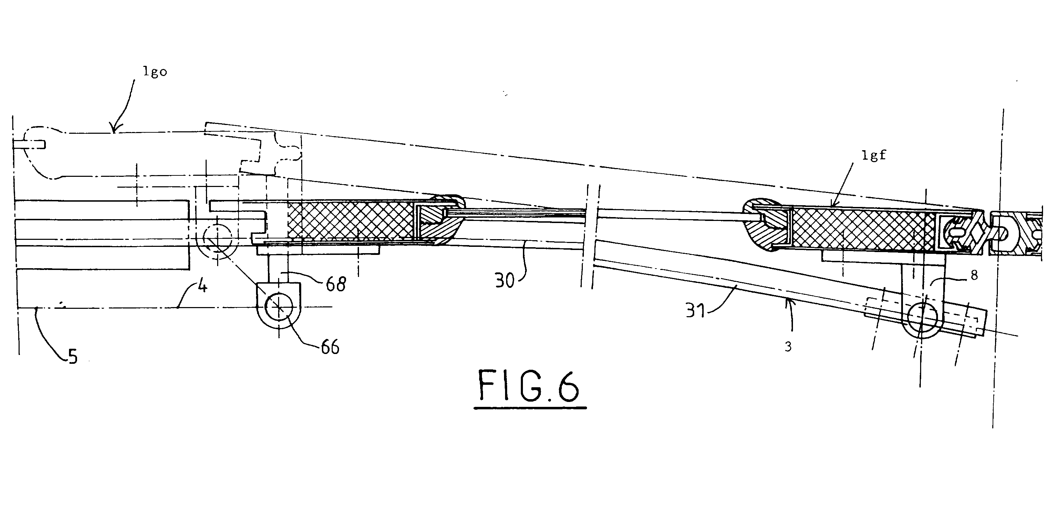

La figure 6 représente une seconde variante de réalisation de système de fermeture dans lequel la porte (1g) est montée sur sa partie avant comme précédemment à l'aide d'un patin (86) à circulation de billes maintenu détaché du rail cintré (3) par un bras (8) monté pivotant par un pivot (81) avec la pièce (82) solidaire du patin (86). Pour sa partie arrière la porte (1g) comporte un rail supérieur (4) de suspension et un rail (5) inférieur de guidage, les deux rails (4, 5) étant rectilignes et disposés dans un même plan vertical et parallèle à la paroi externe de la caisse, le patin coulissant (66) arrière étant monté dans le rail supérieur (4). La liaison entre le patin (66) arrière supérieur coulissant et le vantail arrière s'effectue à l'aide d'un vérin (68) qui permet le déboîtement de la porte d'une distance D correspondant à la distance D représentant l'écart entre la partie linéaire (30) du rail de coulissement et la partie cintrée (31). De même le rail de guidage inférieur (5) en U est rectiligne et la liaison entre le doigt qui circule dans ce rail (5) en U et la partie inférieure du vantail est effectuée à l'aide d'un vérin (78) non représenté permettant un déboîtement d'une distance D.

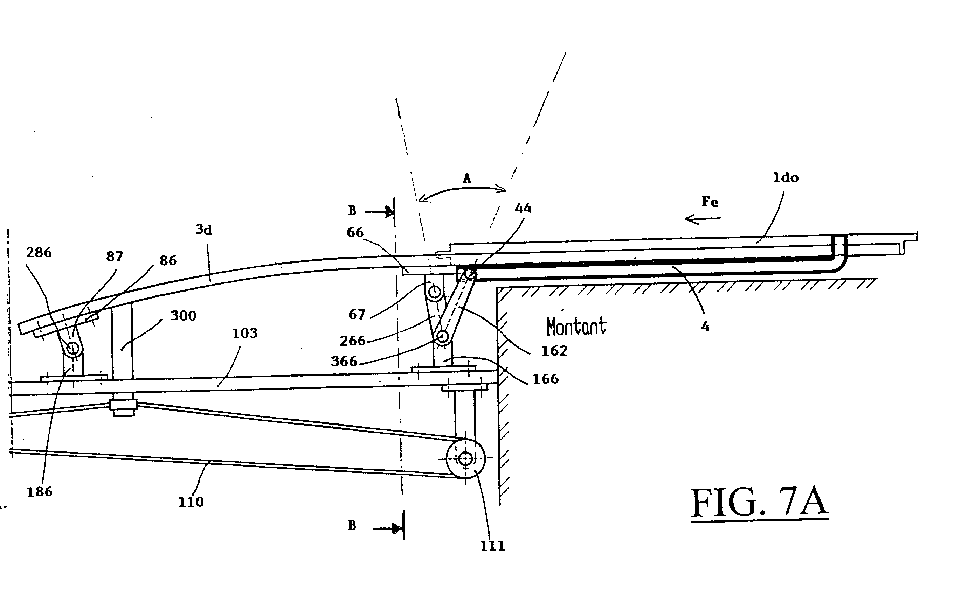

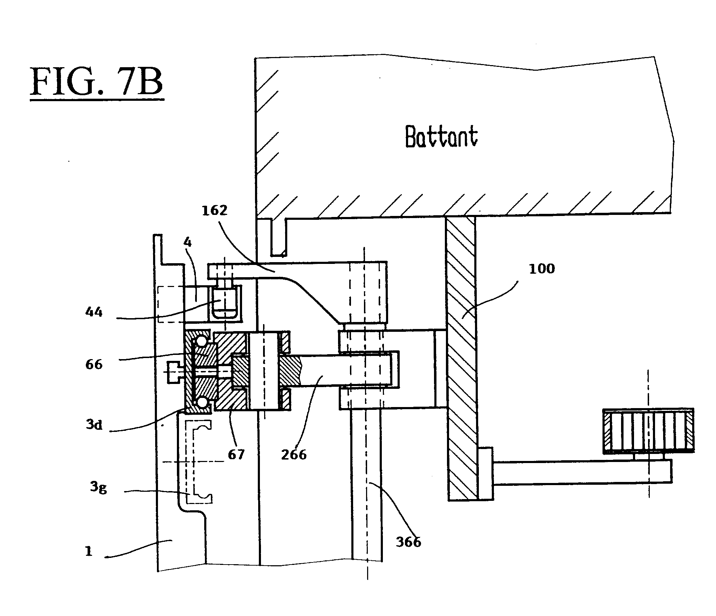

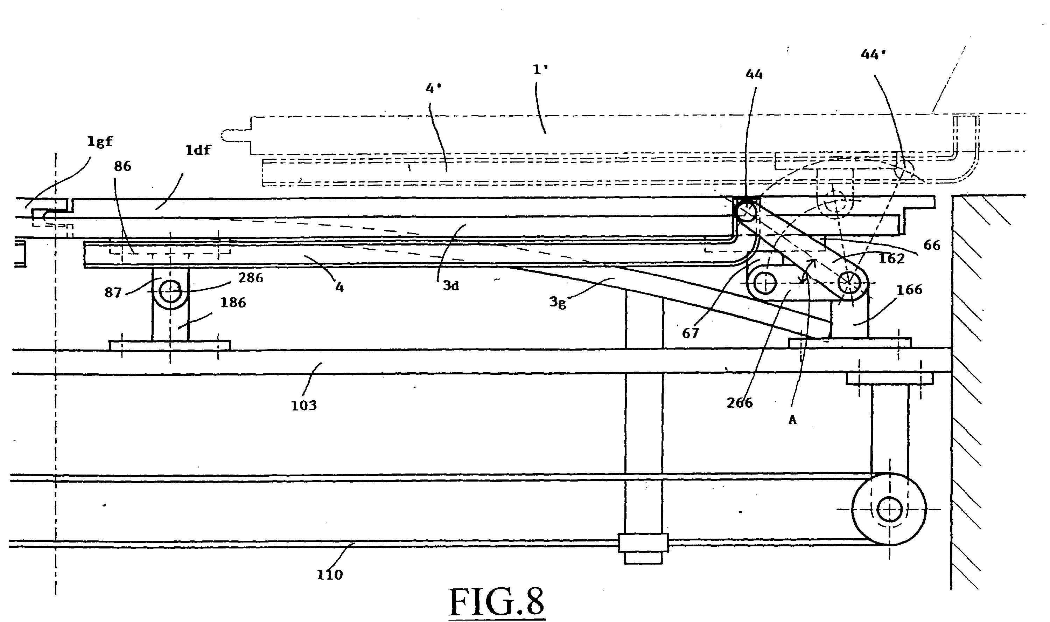

Les figures 7A, 7B et 8 représentent une troisième variante de réalisation du système de fermeture selon l'invention dans lequel le rail (3) de coulissement et de suspension du vantail (1) est solidaire de la partie supérieure du vantail (1) de porte. Le système de fermeture de la variante des figures 7A, 7B et 8 est constitué de deux vantaux (1) se joignant pour obturer l'ouverture de la caisse (2), mais seul un vantail (1d), ou vantail de droite, est représenté. Ce vantail de droite (1d) sera désigné par (1do) en position d'ouverture et (1df) en position de fermeture. Le rail (3) de coulissement et de suspension est parallèle à l'arête supérieure du vantail (1d) et est cintré sur la partie dépassant l'avant du vantail (1d) et correspondant substantiellement à sa moitié avant environ. La moitié arrière du rail (3) de coulissement et de suspension et fixée sur la totalité de la longueur du vantail (1). De cette façon, la partie cintrée du rail (3) est située à l'avant du vantail (1), sensiblement dans le prolongement de la partie droite. Comme précédemment, les dispositifs (86, 66) de coulissement avant et arrière sont constitués chacun d'un patin (86, 66) à circulation de billes. Comme précédemment également, le rail (3) de coulissement et de suspension est pourvu d'une goulotte dans laquelle circulent les billes des patins (66, 86). Le vantail (1) est également pourvu d'un rail (4) de guidage supérieur de section en U, solidaire du vantail (1) et situé à proximité de son arête supérieure. Le rail (4) de guidage supérieur est constitué d'une portion longue parallèle au vantail (1) depuis l'extrémité avant du vantail (1) jusqu'à proximité de la partie arrière du vantail (1). A son extrémité arrière le rail (4) de guidage supérieur comporte une portion coudée de faible longueur orientée vers l'intérieur du corps du vantail (1) de façon que le rail (4) de guidage supérieur forme sensiblement un L en vue de dessus. Les patins (86, 66) de coulissement avant et arrière sont pourvus chacun d'un pied respectif (87, 67) perpendiculaire au plan contenant les billes. Les pieds (87, 67) des patins (86, 66) avant et arrière sont montés articulés sur un support (186, 166) respectif solidaire d'une partie (100) fixe du cadre de l'ouverture qui peut être une poutre. La poutre (103) est constituée d'une plaque rectangulaire et verticale formant le support des mécanismes de coulissement, de guidage supérieur et d'entraînement du vantail (1) décrits plus en détail ci-après. La partie avant et supérieure du rail (3) de coulissement et de suspension comporte un bras (300) relié à une courroie (110) du système d'entraînement des vantaux (1) représenté partiellement. La courroie (110) d'entraînement des vantaux (1) est tendue entre deux poulies (111) montées sur la face de la poutre (103) tournée vers l'intérieur de la caisse. L'extrémité du pied (87) du patin (86) de coulissement avant est montée pivotante sur un premier (186) support solidaire de la poutre (103). Le premier (186) support, destiné au patin (86) de coulissement avant est situé sensiblement au milieu de l'ouverture. Le patin (86) avant pivote, au niveau de l'extrémité de son pied (87), autour d'un axe (286) vertical de façon à s'adapter au cintrage du rail (3) de coulissement et de suspension lorsque le rail (3) se déplace dans le sens de la flèche Fe (figure 7A). L'extrémité du pied (67) du patin (66) de coulissement arrière est montée articulée sur une première biellette (266) elle même articulée sur un second (166) support solidaire de la poutre (103) et situé à proximité du bord latéral de l'ouverture. Une première extrémité de la première (266) biellette est montée pivotante sur le second (166) support autour d'un axe vertical (366). Le pied (67) du patin (86) arrière est monté pivotant sur la seconde extrémité de la première (266) biellette. Le montage articulé à biellette (266) du patin (86) arrière sur le second support (166) est destiné à permettre au patin (66) de s'adapter aux différentes positions du vantail (1) par rapport à la caisse lors de ses déboîtements. Une seconde biellette (162), de longueur supérieure à la longueur de la première (266) biellette, est montée pivotante sur l'axe (366) par une première de ses extrémités sur le second support (166). La seconde biellette (162) est pivotante par rapport au support (166) autour du même axe vertical (366) autour duquel pivote la première (266) biellette. La seconde extrémité de la biellette (162) est pourvue d'un doigt ou galet de guidage logé dans le rail (4) de guidage supérieur entre les jambes du U. Comme précédemment, le doigt de guidage peut être constitué par exemple d'un galet (44) monté sur roulement et roulant le long des faces intérieures du profil en U du rail (4) de guidage supérieur. La première biellette (266) et la seconde biellette (162) sont solidaires angulairement et montées pivotantes autour de l'axe (366) de façon que l'angle A entre ces dernières soit constant lors des mouvements du vantail (1). Dans l'exemple de réalisation non limitatif des figures 7A et 8, l'angle A est égal à environ 35 degrés. La seconde biellette (162) portant le doigt de guidage constitue le dispositif de déboîtement du vantail (1), comme cela sera décrit plus en détail ci-dessous. La figure 8 représente une vue de dessus du vantail de droite (1df) d'un système de fermeture de porte à double vantail en position fermée. Ainsi, l'extrémité avant cintrée du rail (3g) de coulissement et de suspension du vantail gauche non représenté est située en vis à vis du vantail droite (1df). L'extrémité avant cintrée du vantail de droite (1d) n'est pas visible car située en vis à vis du vantail gauche. Bien entendu, les deux rails (3g, 3d, figure 7B) de coulissement et de suspension des deux vantaux (1g, 1d) sont situés dans deux plans horizontaux différents pour empêcher le télescopage de leur partie avant lors de la fermeture des vantaux (1g, 1d). En position fermée du vantail (1d), la première (266) biellette est substantiellement parallèle au plan du vantail (1d) et la seconde biellette (162) pourvue du doigt (44) de guidage est décalé angulairement vers l'extérieur du cadre de l'angle A défini ci-dessus. Dans cette position fermée, le galet (44) de guidage de l'extrémité de la seconde biellette (162) est situé à l'extrémité de la partie coudée du rail (4) de guidage supérieur, en butée contre le corps du vantail (1d).

En fonctionnement, pour actionner dans le sens de l'ouverture le vantail (1d) de la figure 8, la courroie (110) est entraînée dans le sens horaire dans lequel elle tire le bras (300) du rail (3) de coulissement et de suspension en direction du bord latéral du cadre situé à l'arrière du vantail (1d). Lors de cet actionnement en ouverture, la partie coudée du rail (4) de guidage supérieur exerce un effort au niveau du galet (44) de la seconde biellette (162) provoquant le pivotement de cette dernière vers le bord latéral du cadre dans le sens horaire. Le pivotement de la seconde biellette (162) entraîne le pivotement de première biellette (266), qui, par le biais du pied (67) va pousser la partie arrière du vantail (1d), pour provoquer le déboîtement du vantail (1d) par rapport à l'alignement de la caisse. Durant ce déboîtement du vantail (1d) vers l'extérieur, l'ensemble seconde biellette (162), première biellette (266) pivotent vers le bord latéral du cadre jusqu'à ce que la seconde biellette. (162) soit sensiblement perpendiculaire au plan de l'ouverture. Dans cette position, la distance entre le vantail (1) et l'ouverture du cadre est maximum. Simultanément, le galet (44) descend dans la partie coudée et perpendiculaire au plan du vantail (1d) de l'extrémité arrière du rail (4) de guidage supérieur jusqu'à ce que le galet (44) se positionne à l'extrémité arrière de la portion rectiligne du rail (4) de guidage supérieur. Lors de ce déboîtement, les patins de coulissement avant (86) et arrière (66) coulissent sur une faible longueur du rail (3) de coulissement et de suspension. Puis, le vantail (1d) sorti du cadre va pouvoir coulisser à l'extérieur, le galet (44) va suivre la portion rectiligne du rail (4) de guidage supérieur, les patins de coulissement avant (86) et arrière (66) coulissant le long du rail (3) de coulissement et de suspension. Le mouvement de translation du vantail (1d) dans le sens de l'ouverture va, provoquer la fin de la rotation de l'ensemble seconde biellette (162), première biellette (266) vers le bord latéral arrière de l'ouverture, de façon que la seconde biellette (162) soit disposée à environ 90 degrés de la position qu'elle occupe en position de fermeture. La fin de rotation de l'ensemble seconde biellette (162), première biellette (266), provoque un très faible mouvement de retour du vantail (1) vers la caisse perpendiculairement au plan de l'ouverture. Le vantail (1d) est alors décalé par rapport à la paroi extérieure de la caisse (2) d'une distance D correspondant à la distance entre la partie avant du rail (3) de coulissement et de suspension et la partie linéaire de ce rail (3). La figure 8 représente en pointillés la position du vantail (1'), du rail (4') de guidage supérieur et du galet (44') lorsque la seconde biellette( 162) est arrivée en fin de rotation vers le bord latéral du cadre. Dans cette position, le galet (44') entame son roulement dans la partie rectiligne du rail (4') de guidage supérieur. En fin de coulissement du vantail (1d) dans le sens de son ouverture, le patin de coulissement avant (86) est situé au niveau de l'extrémité avant du rail (3d) de coulissement et de suspension, tandis que le patin arrière (66) est situé au niveau de l'extrémité avant de la partie rectiligne du rail (3) de coulissement et de suspension.

Le mouvement de fermeture du vantail (1d) et en particulier son mouvement d'emboîtement dans l'ouverture est réalisé selon le processus inverse. Ainsi, lors du mouvement de fermeture du vantail (2), lorsque le galet (44) arrive au niveau du coude du rail (4) de guidage supérieur, le rail (4) de guidage supérieur exerce un effort sur le galet (44) qui fait pivoter vers l'intérieur du cadre la seconde biellette (162) dans le sens anti-horaire. Le pivotement de la seconde biellette (162) provoque le pivotement de la première biellette (266) dans le même sens de rotation et selon la même amplitude. Par son pivotement, la première biellette (266) tire et emboîte le vantail (1d) vers l'intérieur du cadre. Le galet (44) étant situé au niveau de l'extrémité coudée, la fin de l'emboîtement provoque la fin de la rotation de la seconde biellette (162) vers l'intérieur du cadre et par réaction, la fin de la rotation de la première biellette (266). L'ensemble première biellette (266), seconde biellette (162) retrouve alors sa position initiale. Pendant la fin du mouvement d'emboîtement du vantail (1), le galet (44) suit la partie coudée du rail (4) de guidage supérieur jusqu'à son extrémité, contre du vantail (1).

Bien évidemment, le vantail (1) de la variante des figures 7A, 7B et 8 peut comporter un rail de guidage inférieur. Le système de guidage inférieur du vantail (1) peut être sensiblement identique au guidage supérieur décrit ci-dessus ou peut avoir une autre forme. C'est à dire que le rail de guidage inférieur peut être solidaire soit du vantail (1), soit de la caisse.

Bien sûr et comme précédemment, il est possible de réaliser un système d'ouverture comportant un unique vantail (1) de la dimension de l'ouverture. Dans ce cas, un logement ou passage est prévu dans le cadre pour accueillir l'extrémité avant du rail (3) de coulissement et de suspension lors de la fermeture du vantail (1).

La variante des figures 7A, 7B et 8 décrite ci-dessus, dans laquelle le rail (3) de coulissement et de suspension du vantail (1) est solidaire de la partie supérieure du vantail (1) de porte, présente un avantage notable en ce qui concerne l'étanchéité de la porte. En effet, contrairement aux modes de réalisation des figures 1A, 1B, 2A et 2B et 6, il n'est pas nécessaire de prévoir une ouverture dans la caisse pour le passage, lors de l'ouverture, des bras de liaison à la partie arrière du vantail (1) qui maintiennent le vantail (1) à une distance D de la caisse.

Quel que soit la variante de réalisation, le rail (3) de coulissement et de suspension peut descendre jusqu'à par exemple 400 à 500 mm ou être supérieur. Dans le cas par exmple de rayons de cintrage faibles du rail (3) de coulissement et de suspension, et de manière avantageuse, les patins (66, 86) à circulations de billes peuvent être faiblement cintrés vers l'intérieur de la caisse. Le rayon de cintrage des patins (66, 86) est supérieur ou égal au rayon de cintrage du rail (3) de coulissement et suspension. Le diamètre des billes peut être compris par exemple entre 5 et 10 mm. Suivant les réalisations de l'invention, et comme déjà mentionné dans la description, le rayon de cintrage du rail (3) de coulissement et de suspension peut être deux à trois fois supérieur à la dimension ou longueur du vantail (1). Les différents paramètres de fonctionnement du système que sont : le rayon de cintrage du rail (3) de coulissement, la longueur des patins, le diamètre des billes et le cintrage des patins (66, 86) sont déterminés par l'homme du métier. En effet, plus le vantail (1) est grand, plus les patins (66, 86) sont grands, plus le diamètre des billes est grand et plus le rail (3) de coulissement et suspension est cintré. A un cintrage de rail (3) de coulissement et suspension déterminé, il est en effet toujours possible d'associer un patin à billes ayant d'une part une longueur déterminée et d'autre part des billes de diamètre déterminé.

D'autres modifications à la portée de l'homme de métier font également partie de l'esprit de l'invention.

## Revendications

1. Système de fermeture d'une ouverture (21, 23, 24) formée dans la caisse (2) d'un véhicule par au moins un vantail (1) coulissant constituant une porte dans lequel la porte est d'une part suspendue à sa partie avant et arrière par un dispositif de coulissement (66, 86) respectif se déplaçant dans un rail (3) de coulissement et de suspension et d'autre part guidé par au moins un rail (4) de guidage caractérisé en ce que les dispositifs de coulissement (66, 86) sont constitués d'au moins un patin (66, 86) à circulation de billes, le rail (3) de coulissement et de suspension, cintré faiblement vers l'intérieur de la caisse, ayant une longueur de l'ordre de deux fois la longueur du vantail (1) et étant pourvu d'une goulotte dans laquelle circule les billes du ou des patins (66, 86), le dispositif de coulissement de la partie arrière étant relié au vantail (1) de la porte par un dispositif de déboîtement (61, 63, 62) permettant à la porte de déboîter par rapport à la caisse (2) d'une valeur correspondant à la dimension D entre la partie avant du rail cintrée (31) et la partie linéaire (30) de ce rail (3), pour dégager le vantail (1) à l'extérieur de la caisse dans la position d'ouverture.

2. Système de fermeture d'une ouverture formée dans la caisse d'un véhicule selon la revendication 1, caractérisé en ce que le rail (3) de coulissement et de suspension est solidaire de la partie supérieure du vantail (1) de porte, les dispositif (86, 66) de coulissement avant et arrière étant constitués chacun d'un patin (86, 66) à circulation de billes articulés sur un support (186, 166) respectif solidaire d'une partie (100) fixe de la caisse (2).

3. Système de fermeture d'une ouverture formée dans la caisse d'un véhicule selon la revendication 1 ou 2, caractérisé en ce qu'il comporte deux rails (4, 5) de guidage pour chaque vantail (1) disposés respectivement en partie supérieure (23) et inférieure (24) du vantail (1) qui coopèrent chacun avec un doigt de guidage (64, 44), respectivement (74).

4. Système de fermeture d'une ouverture formée dans la caisse d'un véhicule selon la revendication 3, caractérisé en ce que le patin (66) arrière de coulissement est articulé sur une première biellette (266) montée pivotante sur le support (166) fixe, le rail (4) de guidage supérieur étant solidaire du vantail (1) de porte et constitué d'une portion longue parallèle au vantail (1) et d'une portion coudée de faible longueur située sensiblement dans la partie arrière du vantail (1), le rail (4) de guidage supérieur formant sensiblement un L dont le pied constitué par la partie coudée est orienté vers le vantail (1), le dispositif de déboîtement étant constitué d'une seconde biellette (162), de longueur supérieure à la longueur de la première (266) biellette articulée avec le patin (66) arrière, la seconde biellette étant montée pivotante par une première de ses extrémités sur le support (166) fixe du dispositif de coulissement arrière (66), la seconde extrémité de la biellette (162) supportant un doigt de guidage (44) logé dans le rail (4) de guidage, la première biellette (266) et la seconde biellette(162) étant solidaires angulairement entre elles et pivotant autour d'un même axe (366) de façon que l'angle A formé entre elles soit constant lors des mouvements du vantail (1).

5. Système de fermeture d'une ouverture formée dans la caisse d'un véhicule selon l'une quelconque des revendications 1 à 4, caractérisé en ce que deux vantaux (1g, 1d) sont montés de façon à ce que les deux parties avant des vantaux (1g, 1d) se joignent et obturent totalement l'ouverture de la caisse (2), les parties arrières venant par emboîtement s'aligner avec la paroi extérieure de la caisse, les deux rails (3) de coulissement et de suspension des vantaux (1g, 1d) étant situés dans deux plan horizontaux différents pour empêcher le télescopage de la partie avant de ces derniers lors de la fermeture des vantaux (1g, 1d).

6. Système de fermeture d'une ouverture formée dans la caisse d'un véhicule selon l'une quelconque des revendications 1 à 4 caractérisé en ce qu'il comporte un seul vantail (1) de dimensions correspondant aux dimensions de l'ouverture de la caisse, la caisse comportant un logement ou ouverture situé dans sa partie opposée au côté d'ouverture du vantail (1) et destiné à accueillir l'extrémité avant cintrée du rail (3) de coulissement et de suspension lors de la fermeture du vantail (1).

7. Système de fermeture d'une ouverture formée dans la caisse d'un véhicule selon la revendications 1 caractérisé en ce que le rail (3) de coulissement et de suspension est solidaire de la partie supérieure (23) de la caisse du véhicule le dispositif de coulissement (86) de la partie avant est monté pivotant par rapport à une pièce d'entretoise (8) de dimension fixe solidaire du vantail (1) de porte et dont la dimension correspond à l'écart D entre la partie avant du rail cintrée (31) et la partie linéaire (30) de ce rail (3).

8. Système de fermeture d'une ouverture formée dans la caisse d'un véhicule selon la revendications 7, caractérisé en ce qu'il comporte deux rails (4, 5) de guidage pour chaque vantail (1) disposés respectivement en partie supérieure (23) et inférieure (24) du vantail (1) et coopèrent chacun avec un doigt de guidage (64), respectivement (74), le dispositif de déboîtement d'un vantail (1) est constitué d'une biellette (62) reliée d'une part au dispositif de coulissement (66) de la partie arrière du vantail (1) et d'autre part au doigt de guidage (64) coopérant avec le rail (4) de guidage (5) supérieur, les rails (4, 5) de guidage supérieur et inférieur étant coudés (41, 51) à proximité de l'ouverture de la caisse (2) et ayant leur partie droite s'étendant à l'extérieur.

9. Système de fermeture d'une ouverture formée dans la caisse d'un véhicule selon l'une quelconque des revendications 1 à 8, caractérisé en ce que le rail (3) de coulissement et de suspension est cintré en tout point de la partie cintrée selon un rapport entre la longueur du patin, le rayon de cintrage du rail, le diamètre des billes, le diamètre de chemin de roulement et les jeux; le cintrage étant disposé dans l'ouverture.

10. Système de fermeture d'une ouverture formée dans la caisse d'un véhicule selon une des revendications 1 à 9, caractérisé en ce que le cintrage du rail (3) de coulissement et suspension est formé dans sa partie avant sur la moitié de sa longueur environ, le rayon de cintrage étant au moins deux fois supérieur à la longueur du vantail (1).

11. Système de fermeture d'une ouverture formée dans la caisse d'un véhicule selon une des revendications 1 à 10, caractérisé en ce que les patins (66, 86) à circulations de billes sont faiblement cintrés vers l'intérieur de la caisse, le rayon de cintrage des patins (66, 86) étant supérieur ou égal au rayon de cintrage du rail (3) de coulissement et suspension.

12. Système de fermeture d'une ouverture formée dans la caisse d'un véhicule selon une des revendications 1 à 11, caractérisé en ce que des moyens d'actionnement automatique d'un vantail de la porte sont reliés entre une partie fixe de la caisse (2) et une pièce du vantail (1) et sont pourvus de moyens permettant la fourniture d'un surcroît de puissance pour permettre le déboîtement de la porte par rapport à l'ouverture du cadre.

13. Système de fermeture d'une ouverture formée dans la caisse d'un véhicule selon une des revendications 1 à 6, caractérisé en ce que des moyens d'actionnement automatique d'un vantail (1) de la porte sont reliés entre une partie (103) fixe de la caisse (2) et le rail (3) de coulissement et de suspension et sont pourvus de moyens permettant la fourniture d'un surcroît de puissance pour permettre le déboîtement de la porte par rapport à l'ouverture du cadre.
